# EUROPÄISCHE PATENTSCHRIFT

(11) **EP 1 713 572 B1**
(45) Veröffentlichungstag und Bekanntmachung des Hinweises auf die Patenterteilung: **08.09.2010**
(21) Anmeldenummer: 05700359.2
(22) Anmeldetag: 08.02.2005
(51) Int. Cl.: B01F 15/02, B01F 15/00, B65G 65/46, B65G 65/42, B01F 7/16

(54) **VORRICHTUNG ZUM DOSIEREN VON SCHÜTTGÜTERN**
DEVICE FOR DOSING BULK MATERIAL
DISPOSITIF DE DOSAGE DE PRODUITS EN VRAC

(30) Priorität: 13.02.2004 CH 219042004
(43) Veröffentlichungstag der Anmeldung: 25.10.2006
(73) Patentinhaber: K-tron (Switzerland) Ltd., 5702 Niederlenz (CH)
(72) Erfinder: LEHMANN, Rolf, CH-5600 Ammerswil (CH)
(74) Vertreter: Stump, Beat
(86) Internationale Anmeldenummer: PCT/CH2005/000068
(87) Internationale Veröffentlichungsnummer: WO 2005/077512

(56) Entgegenhaltungen:
- EP-A- 0 049 315
- EP-A- 0 486 424
- EP-A- 0 842 626
- WO-A-00/30517
- DE-B- 1 087 512
- FR-A- 2 635 314
- US-A- 4 332 539
- US-A- 4 518 262
- US-A- 5 339 997
- US-A- 6 007 011

## Beschreibung

Die vorliegende Erfindung betrifft eine Vorrichtung zum Dosieren von Schüttgütern mit einer Dosiereinheit, einem Rührwerk und einer Antriebseinheit nach dem Oberbegriff des Patentanspruchs 1.

Vorrichtungen zum Dosieren von Schüttgütern gehören zum allgemeinen Stand der Technik und sind in vielen Ausführungsformen bekannt.

Der vorliegenden Erfindung nahe kommt die Dosier-Differentialwaage vom Typ DDW-H32-DDSR40-60[110] von Brabender Technologie KG.

Dieses Gerät verfügt über einen Behäter für Schüttgüter mit einem Rührwerk und untereinander austauschbaren Schneckenprofilen. Je nach Schüttgut kann eine geeignete Doppel-Dosierschnecke angebracht und verwendet werden. Die Schnecken und das Rührwerk werden je von einem separaten Motor angetrieben.

Nachteilig an diesem Gerät sind anfallende Umrüstzeiten, wenn das Schüttgut ausgetauscht wird. Die produktberührenden Teile, also der Behälter, das Rührwerk und die Schnecken, müssen gereinigt werden. Bei teuren Schüttgütern ist eine Reinigung zudem auch immer mit Kosten verbunden, da ein Teil des Schüttguts verloren geht. Die zwei Motoren machen das Gerät schwer, was sich bei einem Wägesystem ungünstig auf die Messgenauigkeit auswirkt.

Eine Lösung zeigt die EP 0 486 424, die eine Vorrichtung gemäß dem Oberbegriff des Anspruchs 1 offenbart, sowie die US 4 332 539, bei welchen Geräten das Antriebsmodul vom Dosiermodul lösbar ausgebildet ist. Die Achsen des Rührwerks und des Dosierers liegen parallel.

Geräte mit senkrecht zu einander stehenden Achsen von Rührwerk und von Dosiermodul sind im Stand der Technik ebenfalls beknnt; eine solche Ausführung zeigt DE 1 087 512.

Aufgabe der vorliegenden Erfindungen ist es, eine Vorrichtung zur Dosierung von Schüttgütern zu schaffen, bei der nur kleine Umrüstzeiten anfallen und durch Reinigungsprozesse kein Schüttgut verloren geht.

Die Lösung der gestellten Aufgabe ist wiedergegeben in Patentanspruch 1 hinsichtlich ihrer Hauptmerkmale, in den folgenden Patentansprüchen hinsichtlich weiterer vorteilhafter Ausbildungen.

Bei der vorliegenden Erfindung ist die Dosiereinheit als austauschbare Einheit konzipiert. Diese Einheit umfasst alle mit dem Schüttgut in Kontakt kommenden Komponenten. Im Wesentlichen sind das ein Behälter für das Schüttgut zusammen mit einem Rührwerk und einem Dosiermodul mit Dosiermitteln, wie beispielsweise Schnecken. Eine motorische Einheit mit einem einzigen Motor treibt das Rührwerk und die Dosiermittel an. Das Rührwerk ist aus einem Bodenrotor aufgebaut, auf welchen ein Seitenrotor und/oder ein Brückenbrecher aufgesetzt werden können. Der Bodenrotor und der Seitenrotor sind so gestaltet, dass sie sich in geringem Abstand vom Bodenbereich und einen Bereich der Seitenwand des Behälters bewegen. Die Lagerung des Bodenrotors ist so gestaltet, dass sie nicht mit Schüttgut verklebt.

Anhand der Figuren wird die Erfindung im Detail beschrieben.

Es zeigen
- Fig. 1: eine Ansicht einer Dosiereinheit von oben,
- Fig. 2: eine Detailansicht der Dosiereinheit von unten,
- Fig. 3: eine Ansicht eines Bodenrotors,
- Fig. 4: eine Ansicht eines Seitenrotors,
- Fig. 5: eine Ansicht eines Brückenbrechers,
- Fig. 6: eine Ansicht einer Antriebseinheit,
- Fig. 7: eine erste Ansicht die den Austauschvorgang der Dosiereinheit veranschaulicht,
- Fig. 8a, b: zwei weitere Ansichten die den Austauschvorgang der Dosiereinheit veranschaulichen,
- Fig. 9: eine Ansicht eines funktionsbereiten Gerätes.

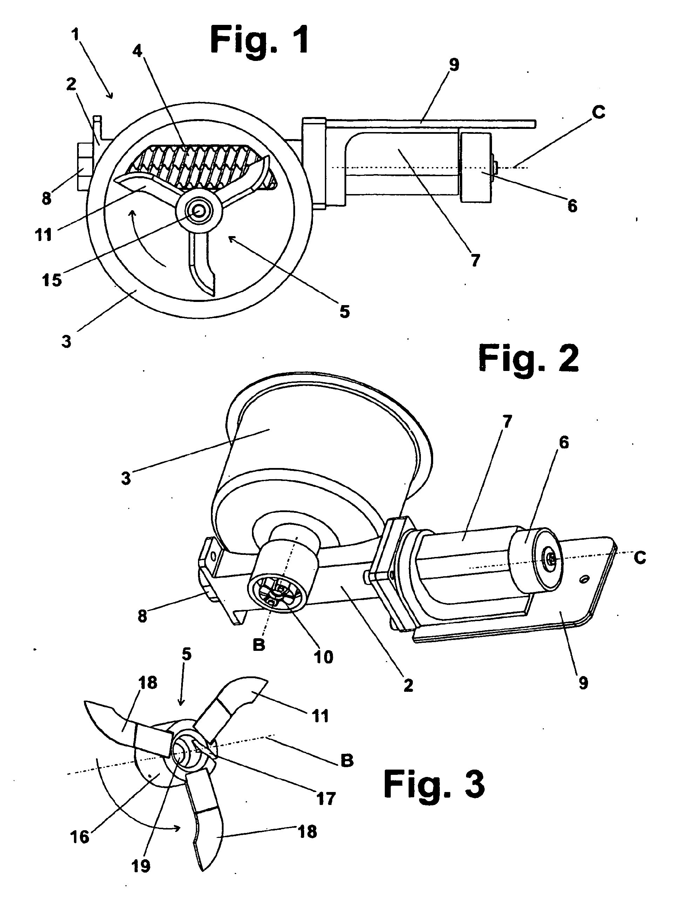

Die Fig. 1 zeigt eine Ansicht von oben auf die erfindungsgemässe Dosiereinheit 1 zum Dosieren von Schüttgütern. Die wesentlichen Komponenten bilden ein Behälter 3 für Schüttgüter, ein Dosiermodul 2 und ein Rührwerk 5. Im Dosiermodul sind zwei Schnecken 4 angebracht; sie sind durch eine Einzugsöffnung im Boden des Behälters 3 sichtbar. Die Schnecken 4 sind austauschbar und können durch andere Schnecken ersetzt werden. Ein Dosiermodul 2 kann aber auch eine einzelne Schnecke 4 aufweisen oder ein anderes Dosiermittel, wie beispielsweise ein Förderband. Die Dosiermittel werden über ein Rad 6 angetrieben. Zwischen den Schnecken 4 und dem Rad 6 ist hier gemäss Fig. 1 zusätzlich noch ein Getriebe 7 angebracht. Auf das Getriebe 7 kann aber verzichtet werden, speziell, wenn nur ein Dosiermittel in dem Dosiermodul angebracht ist, beispielsweise eine einzelne Schnecke 4. In diesem einfachen Fall kann die mit dem Buchstaben C bezeichnete Antriebsachse zugleich auch die Rotationsachse der Schnecke 4 sein. Die Dosiermittel des Dosiermoduls 2 transportieren das Schüttgut zu einem Auslass 8.

Ein Bodenrotor 11 mit drei Blättern 18 des Rührwerks 5 schiebt mit diesen fortwährend Schüttgut in die Einzugsöffnung im Boden des Behälters 3. Hier in der Fig. 1 ist der Bodenrotor 11 in Form eines dreiblättrigen Rotors gestaltet. Selbstverständlich können auch eine andere Anzahl Blätter oder eine andere Art eines Rotors eingesetzt werden, beispielsweise ein rotierendes Netz oder Geflecht. Auch nicht kreisförmige Bewegungen sind erfindungsgemäss. Erfindungswesentlich jedoch ist, dass die Form des Bodenrotors 11 der Innenseite des Bodenbereichs des Behälters 3 angepasst ist und sich in einem Abstand von weniger als 1 mm vom Bodenbereich bewegt. Der geringe Abstand gewährleistet kleine Restmengen von Schüttgut, was speziell bei teuren Schüttgütern Kosten spart. Um den Effekt einer über eine Fläche gleitenden Klinge zu erzeugen, sind die Blätter des Bodenrotors (11) in Drehrichtung vorne angeschrägt.

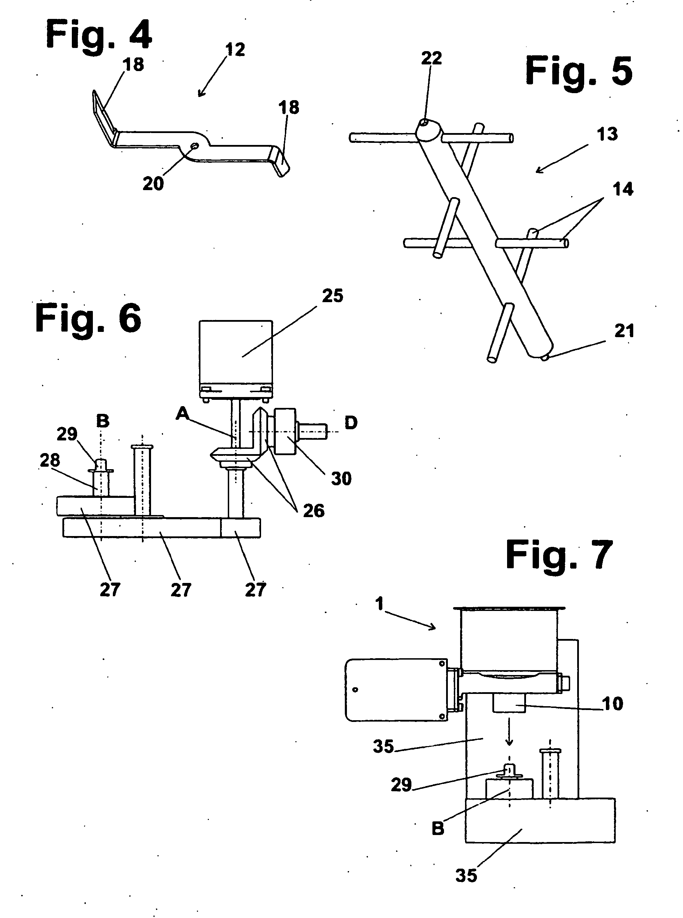

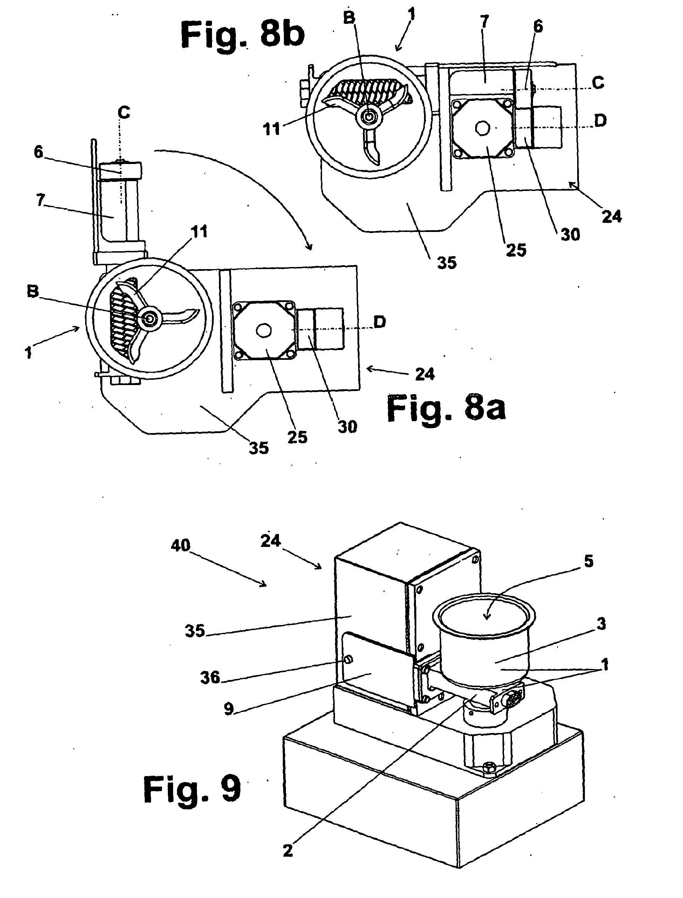

Die Dosiereinheit 1 ist, wie es die Fig. 7 ebenfalls zeigt, als austauschbare Einheit konzipiert und findet in erster Linie in Dosierern, Dosier-Differentialwaagen, Extrudern oder Tablettiermaschienen Anwendung. Zu diesem Zweck verfügt die Achse B, über welche auch das Rührwerk angetrieben wird, an einem Ende über eine axiale Schnellkupplung 10, wie in Fig. 2 dargestellt ist. Bei eingekuppelter axialer Schnellkupplung 10 ist die Dosiereinheit 1 um die Achse B schwenkbar, was in den Fig. 8a, b veranschaulicht wird. Eine mit Dosiereinheiten 1 ausstattbare Maschine eignet sich hervorragend zum Herstellen von Mischungen von Schüttgütern, beispielsweise in einem Labor. Mehrere Dosiereinheiten 1 enthalten je ein Schüttgut- und werden der Reihe nach in die Maschine eingesetzt. Diese Maschinen können beispielsweise mit einer weiter unten beschriebenen Antriebseinheit 24 ausgerüstet sein, welche in vorteilhafter weise mit der Dosiereinheit 1 zusammenarbeitet. Die Fig. 3 zeigt eine Ansicht von schräg unten eines Bodenrotors 11. Der zentrale Bereich des Bodenrotors 11 wird von einer Kappe 16 gebildet. Durch die Kappe 16 verläuft zentral entlang der Achse B eine Bohrung 19, in die beispielsweise ein Schaft 15 passt, an welchem der Bodenrotor 11 befestigt werden kann. Im unteren sichtbaren Teil ist die Bohrung 19 erweitert, so dass bei eingeführtem Schaft 15 in diesem unteren Teil zwischen der Kappe 16 und dem Schaft 15 ein Zwischenraum entsteht. Ist der Bodenrotor 11 wie in Fig. 1 gezeigt, für den Betrieb angebracht und dreht sich, kann Schüttgut in diesen Zwischenraum kriechen, insbesondere wegen des geringen Abstands vom Bodenbereich des Behälters 3 her. Dreht sich der Bodenrotor 11 in den in Fig. 1, 3 angegebenen Pfeilrichtungen, so fliesst das Schüttgut durch eine im unteren Teil der Kappe 16 angebrachte Nut 17 vom Zwischenraum zurück in den Behälter 3. Die Nut 17 ist derart angeordnet, dass ihr inneres Ende in Drehrichtung des Bodenrotors 11 vor dem äusseren Ende läuft, so dass eine Fliessrichtung von Innen nach Aussen vorgegeben ist. Mit dem fortlaufenden Abfliessen von Schüttgut aus dem Zwischenraum wird vermieden, dass sich Schüttgut am Schaft ablagert, dort verpappt oder verklebt und den Bodenrotor 11 mit der Zeit blockieren oder beschädigen kann.

Die Fig. 4 Zeigt einen Seitenrotor 12 mit beispielsweise zwei Blättern 18. Der Seitenrotor kann beispielsweise mit einer Schraube durch ein Loch 20 an der Kappe 16 des Bodenrotors lösbar angebracht werden. Die Blätter 18 sind aussen je eines bezüglich einer vertikalen Drehachse nach oben oder unten gebogen und in Drehrichtung vorne angeschrägt. Im Wesentlichen sind die angeschrägten Teile der Blätter 18 wiederum der Kontur von Wandbereichen des Behälters 3 oder eines aufsetzbaren Zusatzbehälters angepasst und drehen sich in einem Abstand von weniger als 1mm vom betreffenden Wandbereich. Dadurch kann beispielsweise klebendes Schüttgut von diesem Wandbereich entfernt werden, so dass eine kleine Restmenge auch bei klebenden Schüttgütern gewährleistet werden kann.

In der Fig. 5 ist ein Brückenbrecher 13 dargestellt. Im Ausführungsbeispiel gemäss der Fig. 5 verfügt er über acht Brükkenbrecherstäbe 14. An seinem unteren Ende weist er beispielsweise einen Stift 21 auf. Der Stift 21 passt beispielsweise durch das Loch 20 eines Seitenrotors 12, in ein Gewinde der Kappe 16 des Bodenrotors 11 und in eine Öffnung 22 eines weiteren Brückenbrechers 13. Ein Brückenbrechern verfügt über mindestens einen Brückenbrecherstab 14 oder ein den selben Zweck erfüllendes Mittel. Je nach Schüttgut muss der Abstand und die Anzahl der Brückenbrecherstäbe 14 variiert werden. Dies kann einerseits durch Aufeinanderbringen von mehreren Brückenbrechern 13 mit entsprechenden Höhen oder durch verschiebbares Anbringen von mehr oder weniger Brückenbrecherstäben 14 an einem oder mehreren Brückenbrechern 13 erreicht werden.

Die Kombination des Bodenrotors 11 mit einem oder mehreren Seitenrotoren und/oder Brückenbrechern 13 erlaubt den Aufbau mannigfaltiger für ein bestimmtes Schüttgut geeigneter oder optimierter Rührwerke. Beispielsweise können auf einem Bodenrotor 11 in abwechselnder Reihenfolge Seitenrotoren 12 und Brückenbrecher 13 angebracht werden. Selbstverständlich sind auch andere Reihenfolgen erfindungsgemäss. Selbstverständlich sind auch weitere Formen der Blätter 18 und Brückenbrecherstäbe 14 als die in den Ausführungsbeispielen gemäss den Fig. 4, 5 erfindungsgemäss. Beispielsweise können die Blätter beide nach oben oder unten gebogen, wie auch an einen gewölbten oder schrägen Wandbereich eines Behälters 3 oder Zusatztrichters angepasst sein. Auch die Brükkenbrecherstäbe können beispielsweise gebogen sein, über einen Rechen bildende Querstäbe verfügen oder einen beliebigen Querschnitt aufweisen.

In einer weiteren nicht dargestellten Ausführungsform können die Blätter 18 des Seitenrotors 12 so gestaltet sein, dass sie wie die Brückenbrecherstäbe 14 am Brückenbrecher angebracht werden können. Ein so gestalteter Brückenbrecher übernimm dann folglich auch mindestens zum Teil die Funktion des Seitenrotors.

Die Fig. 6 zeigt eine motorische Antriebseinheit 24, welche in vorteilhafter Weise mit einer vorhergehend beschriebenen austauschbaren Dosiereinheit 1 und ihrem Rührwerk 5 zusammenarbeitet. Ein Motor 25 treibt eine Achse A an. Über mehrere Räder 27 wird damit die zur Achse A im Wesentlichen parallele Achse B des Rührwerks 5 angetrieben. Selbstverständlich kann die Kraftübertragung von der Achse A auf die Achse B auch mit anderen dem Fachmann bekannten Mitteln realisiert werden, beispielsweise mit Riemen oder Ketten. Ein sich mit der Achse B drehender Schaft 28 trägt wiederum eine axiale Schnellkupplung 29. Diese axiale Schnellkupplung 29 ist das Gegenstück zur axialen Schnellkupplung 10 der Dosiereinheit 1. Durch die axialen Schnellkupplungen 10, 29 können die motorische Antriebseinheit 24 und die Dosiereinheit 1 derart miteinander verbunden werden, dass die Dosiereinheit 1 um die Achse B schwenkbar ist. Auf der vom Motor 25 angetriebenen Achse A sitzt ein erstes Kegelrad 26, welches ein auf einer zur Achse A im Wesentlichen orthogonalen Achse D sitzendes zweites Kegelrad 26 antreibt. Weiter sitzt auf der Achse D ein Antriebsrad 30. Mittels des Antriebsrads 30 können die Dosiermittel des Dosiermoduls 2 über das Rad 6 angetrieben werden. Es ist folglich für den Antrieb des Rührwerks 5 und den Antrieb der Dosiermittel nur ein Motor 25 vorgesehen. Dadurch kann das Eigengewicht der Antriebseinheit 24 deutlich verringert werden, was die Messgenauigkeit einer Wägeeinrichtung erhöht.

In der Fig. 7 ist die motorische Antriebseinheit 24 der Fig. 6 in einem Gehäuse 35 untergebracht. Die Fig. 7 zeigt weiter, dass die Dosiereinheit 1 durch Aufstecken ihrer axialen Schnellkupplung 10 auf die axiale Schnellkupplung 29 der motorischen Antriebseinheit 24 mit dieser verbunden werden kann. Für diese Art der Verbindung sind dem Fachmann vielerlei Arten von axialen Schnellkupplungen bekannt. Erfindungswesentlich ist das Anbringen je einer Komponente 10 an der Dosiereinheit 1 und einer Komponente 29 an der motorischen Antriebseinheit 24.

Fig. 8a, b zeigen die Dosiereinheit 1 und die motorische Antriebseinheit 24 von oben nach dem Verbinden der axialen Schnellkupplungen 10, 29. Die Dosiereinheit 1 kann nun um die Achse B geschwenkt werden, so dass die Achsen C, D in zueinander im Wesentlichen parallele Lagen zu liegen kommen. Dadurch kommen das Rad 6 und Antriebsrad 30 der Achsen C, D in kraftschlüssigen Kontakt, womit der Motor 25 wie bereits erwähnt auch die Dosiermittel anzutreiben vermag.

In einer Variante zu dem in den Fig. 7, 8a, b gezeigten Anschlussvorgang der Dosiereinheit 1 an die motorische Einheit 24, kann das Gehäuse 35 so gestaltet sein, dass die Dosiereinheit 1 von oben eingeschoben und eingekuppelt wird, direkt in die in der Fig. 8b dargestellte Lage. Auf die in den 8a, b gezeigte Drehbewegung kann dann verzichtet werden.Fig. 9 zeigt ein betriebsbereites Gerät 40 mit allen erfindungsgemässen Komponenten: Im Gehäuse 35 ist die motorische Antriebseinheit 24 untergebracht, die Dosiereinheit 1 zum Dosieren von Schüttgütern ist eingefügt, und der Bodenrotor 11 ist im Behälter 3 angebracht. Eine Platte 9 ist hier mit einer Schraube 36 derart mit dem Gehäuse 35 verbunden, dass eine kraftschlüssige Verbindung zwischen dem Rad 6 und dem Antriebsrad 30 gewährleistet ist. Selbstverständlich kann anstelle der Schraube 36 auch eine Flügelmutter, ein Schnappverschluss, ein Magnet oder ein anderes dem Fachmann geläufiges Mittel Anwendung finden. Im Betrieb, beispielsweise in einem Labor, können nun in einfacher Weise beispielsweise Mischungen von Schüttgütern hergestellt werden. Ist von einem Schüttgut eine vorgegebene Menge abgewogen worden, wird die Maschine vorzugsweise abgestellt und die Verbindung zwischen der Platte 9 und dem Gehäuse 35 gelöst. Die Dosiereinheit 1 wird dann aus dem Gehäuse 35 beispielsweise herausgeschwenkt und die axialen Schnellkupplungen 10, 29 werden voneinander gelöst, so dass die Dosiereinheit 1 vom Gerät 40 gelöst ist und zur Seite gestellt werden kann. Eine weitere Dosiereinheit 1 mit einem weiteren Schüttgut kann nun in analoger Weise mit dem Gerät 40 verbunden werden, und der Mischprozess kann fortgeführt werden. Dieser Vorgang kann natürlich mit beliebig vielen Dosiereinheiten 1 durchgeführt werden. Die Umrüstzeiten sind äusserst gering und Reinigungsaufwand und damit verbundener Material- und Zeitverlust fallen solange nicht an, bis das Schüttgut einer Dosiereinheit 1 ausgetauscht werden muss.

### Liste der Bezugszeichen

- 1.: Dosierinheit
- 2.: Behälter
- 3.: Dosiermodul
- 4.: Schnecke
- 5.: Rührwerk
- 6.: Rad
- 7.: Getriebegehäuse
- 8.: Auslass
- 9.: Frontplatte
- 10.: Schnellkupplung
- 11.: Bodenrotor
- 12.: Seitenrotor
- 13.: Brückenbrecher
- 14.: Brückenbrecherstab
- 15.: Schaft
- 16.: Kappe
- 17.: Nut
- 18.: Blatt
- 19.: Bohrung
- 20.: Loch
- 21.: Stift
- 22.: Öffnung
- 24.: Antriebseinheit
- 25.: Motor
- 26.: Kegelrad
- 27.: Rad
- 28.: Schaft
- 29.: Schnellkupplung
- 30.: Antriebsrad
- 35.: Gehäuse
- 36.: Schrauben
- 40.: Gerät
- A.: Achse
- B.: Achse
- C.: Antriebsachse
- D.: Achse

## Patentansprüche

1. Vorrichtung zum Dosieren von Schüttgütern bestehend aus einer Antriebseinheit (24) mit einem einzigen Antriebsmotor (25) und einer Dosiereinheit (1), die im Wesentlichen besteht aus einem Dosiermodul (2) mit Dosiermitteln und einem Behälter (3) für die Schüttgüter, wobei im Behälter (3) ein Rührwerk (5) angeordnet ist, **dadurch gekennzeichnet, dass** die Achse (B) des Rührwerks (5) senkrecht zur Antriebsachse (C) der Dosiermittel angeordnet ist, wobei die Dosiereinheit (1) eine austauschbare Einheit bildet, die von der Antriebseinheit (24) lösbar und wieder mit dieser verbindbar ausgebildet ist, dass die Antriebseinheit ausgebildet ist, das Dosiermodul (2) lösbar aufzunehmen und, bei eingesetztem Dosiermodul (2), beide Achsen (B) des Rührwerks und (C) der Dosiermittel anzutreiben.

2. Vorrichtung nach Patentanspruch 1, **dadurch gekennzeichnet, dass** das Dosiermodul (2) als Dosiermittel mindestens eine Schnecke (4) oder ein Förderband zum Transport von Schüttgut aus dem Behälter enthält, wobei die Dosiermittel über eine Antriebsachse (C) angetrieben werden.

3. Vorrichtung nach einem der vorangehenden Ansprüche, **dadurch gekennzeichnet, dass** an der Achse (B) des Rührwerks (5) eine axiale Schnellkupplung (10) angeordnet ist und dass an der Antriebsachse (C) der Dosiermittel Mittel zur Kraftübertragung angebracht sind

4. Vorrichtung nach Anspruch 3, **dadurch gekenntzeichnet, dass** die axiale Schnellkupplung (10) unterhalb des Behälters (3) angeordnet ist.

5. Vorrichtung nach einem der Ansprüche 3 oder 4, **dadurch gekennzeichnet, dass** das Mittel zur Kraftübertragung an der Antriebsachse (C) der Dosiermittel ein Rad (6) ist.

6. Vorrichtung nach einem der Ansprüche 3 bis 5, **dadurch gekennzeichnet, dass** die Vorrichtung (1) bei eingekuppelter Schnellkupplung (10) um die Achse (B) des Rührwerks (5) in eine Betriebsstellung schwenkbar ist und die Mittel zur Kraftübertragung, insbesondere das Rad (6), **dadurch** in kraftschlüssigen Kontakt mit Antriebsmitteln gebracht oder von diesen gelöst werden können.

7. Vorrichtung nach einem der vorangehenden Ansprüche, **dadurch gekennzeichnet, dass** die Vorrichtung (1) ein Getriebe (7) für die Dosiermittel umfasst.

8. Vorrichtung nach einem der vorangehenden Ansprüche, **dadurch gekennzeichnet, dass** das Rührwerk (5) aus einem Bodenrotor (11) aufgebaut ist und in beliebiger Kombination mit einem oder mehreren Seitenrotoren (12) und Brückenbrechern (13) erweitert werden kann.

9. Vorrichtung nach Anspruch 8, **dadurch gekennzeichnet, dass** der Bodenrotor (11) im zentralen Bereich des Rührwerkes (5) über eine Kappe (16) verfügt, durch welche entlang der Achse (B) eine im unteren Teil erweiterte Bohrung (19) verläuft, so dass der Bodenrotor (11) an einem Schaft (15) im Behälter (3) angeordnet und sich um die Achse (B) drehen kann, wobei im unteren Teil der Kappe (16) ein Zwischenraum entsteht und die Kappe (16) in diesem unteren Teil über mindestens eine Nut (17) verfügt.

10. Vorrichtung nach Anspruch 9, **dadurch gekennzeichnet, dass** das innere Ende der Nut (17) in Drehrichtung des Rührwerks (5) vor dem äusseren Ende der Nut (17) läuft, so dass zwischen Schaft (15) und Kappe (16) liegendes Schüttgut durch die Drehbewegung des Rührwerks (5) zurück in den Behälter (3) fliesst.

11. Vorrichtung nach einem der Ansprüche 8 bis 10, **dadurch gekennzeichnet, dass** das Rührwerk (5) über mindestens ein Blatt (18) verfügt, welches der Kontur des Bodenbereichs des Behälters (3) angepasst ist und sich in einem Abstand von weniger als 1 mm vom Bodenbereich des Behälters (3) um die Achse (B) dreht.

12. Vorrichtung nach einem der Ansprüche 8 bis 10, **dadurch gekennzeichnet, dass** ein Seitenrotor (12) über mindestens ein Blatt verfügt, das der Kontur eines Wandbereich des Behälters (3) oder eines Zusatztrichters angepasst ist und sich in einem Abstand von weniger als 1mm vom Wandbereich bewegt, wodurch Schüttgut von dem Wandbereich entfernt wird.

13. Vorrichtung nach einem der Ansprüche 8 bis 12, **dadurch gekennzeichnet, dass** ein Brückenbrecher (13) über mindestens einen Brückenbrecherstab (14) verfügt wobei die Brückenbrecher (13) so gestaltet sind, dass der Abstand zwischen Brückenbrecherstäben eines oder mehrerer Brückenbrecher (13) variiert werden kann.

14. Vorrichtung nach einem der vorangehenden Ansprüche, **dadurch gekennzeichnet, dass** ein einzelner Motor (25) das Rührwerk (5) und die Dosiermittel der Vorrichtung (1) antreibt.

15. Vorrichtung nach Anspruch 14, **dadurch gekennzeichnet, dass** eine Achse (A) des Motors (25) und eine Achse (B) des Rührwerks (5) im Wesentlichen parallel und je im Wesentlichen orthogonal zu einer Antriebsachse (C) der Dosiermittel im Betriebszustand angeordnet sind.

16. Vorrichtung nach Anspruch 14 oder 15, **dadurch gekennzeichnet, dass** die Achse (A) des Motors (25) mittels eines ersten Kegelrades (26) eine zu ihr im Wesentlichen orthogonale Achse (D) mit einem zweiten Kegelrad (26) antreibt.

17. Vorrichtung nach einem der Ansprüche 14 bis 16, **dadurch gekennzeichnet, dass** die Achse (D) im Wesentlichen parallel ist zur Antriebsachse (C) der Dosiermittel im Betriebszustand und diese direkt oder indirekt antreibt.

18. Vorrichtung nach einem der Ansprüche 14 bis 17, **dadurch gekennzeichnet, dass** ein Antriebsrad (30) der Achse (D) das Rad (6) der Antriebsachse (C) antreibt.

## Claims

1. A device for dosing bulk material, consisting of a drive unit (24) with a single drive motor (25) and a dosing unit (1), which consists essentially of a dosing module (2) with dosing means and a container (3) for the bulk material, wherein an agitator (5) is arranged in the container (3), **characterised in that** the axle (B) of the agitator (5) is arranged perpendicularly to the drive axle (C) of the dosing means, wherein the dosing unit (1) forms a replaceable unit which can be detached from and reconnected to the drive unit (24), and **in that** the drive unit is configured to accommodate the dosing module (2) in a detachable manner and to drive both axles (B) of the agitator and (C) of the dosing means when the dosing module (2) is inserted.

2. The device according to Patent Claim 1, **characterised in that** the dosing module (2) contains as the dosing means at least one screw conveyor (4) or a belt conveyor for transporting bulk material from the container, wherein the dosing means are driven by means of a drive axle (C).

3. The device according to one of the preceding claims, **characterised in that** an axial fast coupling (10) is arranged on the axle (B) of the agitator (5) and that means for transmitting force are attached to the drive axle (C) of the dosing means.

4. The device according to Claim 3, **characterised in that** the axial fast coupling (10) is arranged below the container (3).

5. The device according to one of Claims 3 or 4, **characterised in that** the means for transmitting force on the drive axle (C) of the dosing means is a wheel (6).

6. The device according to one of Claims 3 to 5, **characterised in that** the device (1) can be pivoted about the axle (B) of the agitator (5) into an operating position when the fast coupling (10) is coupled, and the means for transmitting force, in particular the wheel (6) can thereby be brought into force-fitting contact with drive means or detached from the latter.

7. The device according to one of the preceding claims, **characterised in that** the device (1) comprises a gear unit (7) for the dosing means.

8. The device according to one of the preceding claims, **characterised in that** the agitator (5) is constructed from a bottom rotor (11) and can be extended in any desired combination with one or a plurality of side rotors (12) and bridge breakers (13).

9. The device according to Claim 8, **characterised in that** the bottom rotor (11) has in the central region of the agitator (5) a cap (16), through which a bore (19), which is widened in the lower part, runs along the axle (B) so that the bottom rotor (11) is arranged on a shaft (15) in the container (3) and can rotate around the axle (B), wherein an interspace is produced in the lower part of the cap (16) and the cap (16) has at least one groove (17) in this lower part.

10. The device according to Claim 9, **characterised in that** the inner end of the groove (17) runs in front of the outer end of the groove (17) in the rotation direction of the agitator (5), so that any bulk material lying between the shaft (15) and the cap (16) flows back into the container (3) thanks to the rotary movement of the agitator (5).

11. The device according to one of Claims 8 to 10, **characterised in that** the agitator (5) has at least one blade (18) which is matched to the contour of the bottom region of the container (3) and rotates about the axle (A) at a distance of less than 1 mm from the bottom region of the container (3).

12. The device according to one of Claims 8 to 10, **characterised in that** a side rotor (12) has at least one blade which is matched to the contour of a wall region of the container (3) or of an additional funnel and moves at a distance of less than 1 mm from the wall region, as a result of which bulk material is removed from the wall region.

13. The device according to one of Claims 8 to 12, **characterised in that** a bridge breaker (13) has at least one bridge breaker rod (14), wherein the bridge breakers (13) are designed in such a manner that the distance between the bridge breaker rods of one or a plurality of bridge breakers (13) can be varied.

14. The device according to one of the preceding claims, **characterised in that** a single motor (25) drives the agitator (5) and the dosing means of the device (1).

15. The device according to Claim 14, **characterised in that** an axle (A) of the motor (25) and an axle (B) of the agitator (5) are arranged essentially parallel and in each case essentially orthogonal to a drive axle (C) of the dosing means in the operating state.

16. The device according to Claim 14 or 15, **characterised in that** the axle (A) of the motor (25) drives an axle (D) which is essentially orthogonal to it with a second conical gear (26) by means of a first conical gear (26).

17. The device according to one of Claims 14 to 16, **characterised in that** the axle (D) is essentially parallel to the drive axle (C) of the dosing means in the operating state and drives the latter directly or indirectly.

18. The device according to one of Claims 14 to 17, **characterised in that** a drive wheel (30) of the axle (D) drives the wheel (6) of the drive axle (C).

## Revendications

1. Dispositif pour le dosage de produits en vrac comprenant une unité d'entraînement (24) avec un unique moteur d'entraînement (25) et une unité de dosage (1), qui comprend essentiellement un module de dosage (2) avec des moyens de dosage et un réservoir (3) pour les produits en vrac, un agitateur (5) étant disposé dans le réservoir (3), **caractérisé en ce que** l'axe (B) de l'agitateur (5) est disposé perpendiculairement à l'axe d'entraînement (C) des moyens de dosage, l'unité de dosage (1) formant une unité amovible qui peut être enlevée de l'unité d'entraînement (24) et est conçue de façon à pouvoir être reliée à nouveau avec cette unité, **en ce que** l'unité d'entraînement est conçue pour recevoir de façon détachable le module de dosage (2) et entraîner les deux axes (B) de l'agitateur et (C) des moyens de dosage lorsque le module de dosage (2) est inséré.

2. Dispositif selon la revendication 1, **caractérisé en ce que** le module de dosage (2) contient comme moyen de dosage au moins une vis sans fin (4) ou une bande transporteuse pour le transport de produit en vrac à partir du réservoir, les moyens de dosage étant entraînés au moyen d'un axe d'entraînement (C).

3. Dispositif selon l'une quelconque des revendications précédentes, **caractérisé en ce qu'**un accouplement rapide (10) axial est disposé sur l'axe (B) de l'agitateur (5) et **en ce que** des moyens pour la transmission de force sont placés sur l'axe d'entraînement (C) des moyens de dosage.

4. Dispositif selon la revendication 3, **caractérisé en ce que** l'accouplement rapide (10) axial est disposé au-dessous du réservoir (3).

5. Dispositif selon l'une quelconque des revendications 3 ou 4, **caractérisé en ce que** le moyen pour la transmission de force sur l'axe d'entraînement (C) des moyens de dosage est une roue (6).

6. Dispositif selon l'une quelconque des revendications 3 à 5, **caractérisé en ce que** le dispositif (1) peut basculer autour de l'axe (B) de l'agitateur (5) dans une position de service lorsque l'accouplement rapide (10) est couplé et les moyens pour la transmission de force, en particulier la roue (6), peuvent être amenés ainsi en contact par adhérence avec des moyens d'entraînement ou peuvent être détachés de ces moyens.

7. Dispositif selon l'une quelconque des revendications précédentes, **caractérisé en ce que** le dispositif (1) comprend un engrenage (7) pour les moyens de dosage.

8. Dispositif selon l'une quelconque des revendications précédentes, **caractérisé en ce que** l'agitateur (5) est conçu à base d'un rotor de fond (11) et peut être étendu dans une combinaison quelconque avec un ou plusieurs rotors latéraux (12) et des concasseurs à pont (13).

9. Dispositif selon la revendication 8, **caractérisé en ce que** le rotor de fond (11) dispose dans la zone centrale de l'agitateur (5) d'un capuchon (16) par lequel un alésage (19) élargi dans la partie inférieure s'étend le long de l'axe (B), de sorte que le rotor de fond (11) peut être disposé sur une tige (15) dans le réservoir (3) et peut tourner autour de l'axe (B), un espace intermédiaire se formant dans la partie inférieure du capuchon (16) et le capuchon (16) disposant d'au moins une rainure (17) dans cette partie inférieure.

10. Dispositif selon la revendication 9, **caractérisé en ce que** l'extrémité intérieure de la rainure (17) passe dans le sens de rotation de l'agitateur (5) devant l'extrémité extérieure de la rainure (17), de sorte que le produit en vrac disposé entre la tige (15) et le capuchon (16) circule sous l'effet du mouvement de rotation de l'agitateur (5) pour revenir dans le réservoir (3).

11. Dispositif selon l'une quelconque des revendications 8 à 10, **caractérisé en ce que** l'agitateur (5) dispose d'au moins une lame (18), qui est adaptée au contour de la zone de fond du réservoir (3) et tourne autour de l'axe (B) à une distance de moins de 1 mm de la zone de fond du réservoir (3).

12. Dispositif selon l'une quelconque des revendications 8 à 10, **caractérisé en ce qu'**un rotor latéral (12) dispose d'au moins une lame qui est adaptée au contour d'une zone de paroi du réservoir (3) ou d'un entonnoir supplémentaire et se déplace à une distance de moins de 1 mm de la zone de paroi, de sorte que le produit en vrac est enlevé de la zone de paroi.

13. Dispositif selon l'une quelconque des revendications 8 à 12, **caractérisé en ce qu'**un concasseur à pont (13) dispose d'au moins d'une barre de concasseur à pont (14), les concasseurs à pont (13) étant conçus de telle sorte que la distance entre les barres d'un ou de plusieurs concasseurs à pont (13) peut être modifiée.

14. Dispositif selon l'une quelconque des revendications précédentes, **caractérisé en ce qu'**un moteur (25) individuel entraînent l'agitateur (5) et les moyens de dosage du dispositif (I).

15. Dispositif selon la revendication 14, **caractérisé en ce qu'**un axe (A) du moteur (25) et un axe (B) de l'agitateur (5) sont disposés sensiblement en parallèle et à chaque fois sensiblement perpendiculairement à un axe d'entraînement (C) des moyens de dosage dans l'état de service.

16. Dispositif selon la revendication 14 ou 15, **caractérisé en ce que** l'axe (A) du moteur (25) entraîne au moyen d'une première roue conique (26) un axe (D) sensiblement perpendiculaire au premier axe avec une seconde roue conique (26).

17. Dispositif selon l'une quelconque des revendications 14 à 16, **caractérisé en ce que** l'axe (D) est sensiblement parallèle à l'axe d'entraînement (C) des moyens de dosage dans l'état de service et entraîne celui-ci directement ou indirectement.

18. Dispositif selon l'une quelconque des revendications 14 à 17, **caractérisé en ce qu'**une roue d'entraînement (30) de l'axe (D) entraîne la roue de l'axe d'entraînement (C).
